**Europäisches Patentamt**

**European Patent Office**

**Office européen des brevets**

(19)

(11) Numéro de publication : **0 374 043 B1**

(12)

# FASCICULE DE BREVET EUROPEEN

(45) Date de publication du fascicule du brevet :
**22.07.92 Bulletin 92/30**

(51) Int. Cl.⁵ : **G01M 11/00**

(21) Numéro de dépôt : **89403462.8**

(22) Date de dépôt : **13.12.89**

(54) **Procédé d'analyse de composants d'optique guidée, fibres optiques ou réseaux de guides optiques par réflectométrie temporelle et réflectomètre dans le domaine temporel.**

(30) Priorité : **14.12.88 FR 8816459**

(43) Date de publication de la demande :
**20.06.90 Bulletin 90/25**

(45) Mention de la délivrance du brevet :
**22.07.92 Bulletin 92/30**

(84) Etats contractants désignés :
**BE CH DE FR GB IT LI LU**

(56) Documents cités :
**EP-A- 0 238 134**
**FR-A- 2 393 287**

(73) Titulaire : **GAZ DE FRANCE**
**23, rue Philibert Delorme**
**F-75017 Paris (FR)**

(72) Inventeur : **Froehly, Claude**
**25 Rue des Sablons**
**F-87100 Limoges (FR)**
Inventeur : **Facq, Paul**
**73 Rue des Fougères**
**F-87350 Panazol (FR)**
Inventeur : **Pagnoux, Dominique**
**29 Avenue du Président Coty**
**F-87000 Limoges (FR)**
Inventeur : **Faugeras, Pierre**
**15 Rue Camille St.Saens**
**F-87000 Limoges (FR)**

(74) Mandataire : **Lejet, Christian Michel et al**
**Bouju Derambure (Bugnion) S.A. 55, rue**
**Boissonade**
**F-75014 Paris (FR)**

EP 0 374 043 B1

Jouve, 18, rue Saint-Denis, 75001 PARIS

## Description

La réflectométrie optique dans le domaine temporel permet l'analyse de composants d'optique guidée, de fibres optiques ou de réseaux de guides optiques. Elle est par exemple utilisée pour l'évaluation des pertes d'insertion des connecteurs et des pertes aux épissures, la détermination des longueurs de tronçons de fibres, la localisation et l'identification des défauts ainsi que l'évaluation de l'atténuation linéique.

Selon son principe traditionnel, une impulsion lumineuse appelée impulsion sonde est injectée dans un guide optique relié au système que l'on souhaite analyser. Au cours de sa propagation, une faible partie de la puissance optique de cette impulsion est rétrodiffusée par les inhomogénéités d'indice de réfraction du système à analyser, par ses défauts et par les dioptres qu'elle rencontre, par les jointages et composants de connectique (connecteurs, coupleurs, atténuateurs ...).

Ce signal de réponse rétrodiffusé constitue une signature du système et comporte des caractéristiques de l'ensemble de ses éléments.

Il est reçu sur un photodétecteur, et c'est le signal électrique correspondant, délivré par un bloc de détection amplification, qui est traité et affiché. La représentation du signal issu des opérations de détection amplification et traitement sera désignée par "trace de rétrodiffusion".

Un tel réflectomètre est connu du document EP-A-0 238 134.

La qualité d'un réflectomètre permettant la mise en oeuvre de ce procédé dépend à la fois de sa dynamique de mesure et de son pouvoir de résolution.

La résolution est la capacité du réflectomètre à dissocier la contribution au signal rétrodiffusé des défauts, dioptres ou composants rapprochés les uns des autres. Elle est d'autant meilleure que la durée des impulsions sondes est courte et que la bande passante de détection amplification est large.

La dynamique, exprimée en décibels, est la valeur maximum du rapport signal à bruit relevée au début de la trace de rétrodifffusion. Elle est d'autant plus grande que les impulsions sondes sont énergétiques (donc de longue durée), et que la bande passante de l'ensemble détection amplification est étroite.

Pour un système donné, la longueur susceptible d'être analysée par un réflectomètre (portée), augmente avec la dynamique de celui-ci.

Les exigences d'une grande dynamique et d'une haute résolution apparaissent donc comme contradictoires et ont conduit jusqu'à présent à un compromis entre ces deux qualités. Certains des appareils connus privilégient la dynamique au détriment de la résolution alors que d'autres préfèrent offrir une meilleure résolution avec une dynamique plus faible.

Le but de la présente invention est de proposer un procédé d'analyse de composants d'optique guidée, fibres optiques ou réseaux de guides optiques par réflectométrie temporelle offrant simultanément une grande dynamique et une haute résolution.

C'est également un objet de la présente invention de proposer un réflectomètre permettant la mise en oeuvre de ce procédé.

C'est un apport important de l'invention de n'avoir pas accepté la limitation généralement admise et d'avoir proposé des moyens permettant de s'en affranchir.

A cet effet, le procédé d'analyse de composants d'optique guidée, fibres optiques ou réseaux de guides optiques par réflectométrie dans le domaine temporel, de l'invention est du type dans lequel on envoie un signal sonde lumineux composé d'impulsions brèves périodiques dans un guide relié au système à analyser, on analyse le signal de réponse rétrodiffusé. Il est caractérisé en ce que le signal de réponse rétrodiffusé est échantillonné par interaction avec le signal lumineux dit signal de pompe, composé d'impulsions lumineuses brèves périodiques, de manière à produire un nouveau signal dit signal échantillonné reçu par un photodétecteur aveugle au signal de pompe et au signal de réponse rétrodiffusé. La fréquence de répétition des impulsions du signal de pompe est voisine de celle des impulsions du signal de sonde, ou voisine d'un multiple ou d'un sous-multiple de cette fréquence. On réalise la recomposition du signal de réponse rétrodiffusé à partir des échantillons de signal fournis par le photodétecteur.

Le réflectomètre dans le domaine temporel destiné à l'analyse de composants d'optique guidée, fibres optiques ou réseaux de guides optiques est du type comportant des moyens d'émission d'un signal lumineux de sonde composé d'impulsions brèves périodiques, un dispositif séparateur de flux lumineux permettant l'injection du signal de sonde dans un guide relié au système à analyser et l'extraction du signal de réponse rétrodiffusé, des moyens d'analyse du signal de réponse rétrodiffusé.

Selon l'invention les moyens d'analyse du signal rétrodiffusé comportent des moyens de production d'une onde de pompe lumineuse composée d'impulsions brèves périodiques, la fréquence de répétition de ces impulsions étant voisine de la fréquence de répétition du signal de sonde ou voisine d'un multiple ou d'un sous-multiple de cette fréquence, des moyens assurant l'interaction de l'onde de pompe avec le signal de réponse rétrodiffusé de manière à réaliser l'échantillonnage optique du signal de réponse rétrodiffusé et la production du signal lunimeux échantillonné, un photodétecteur recevant le signal lumineux échantillonné et insensible à l'onde de pompe et au signal de réponse rétrodiffusé, une unité électronique traitant et mémorisant les échantillons photodétectés et recomposant le signal de réponse rétrodiffusé.

L'invention sera décrite plus en détail ci-après en référence aux figures dans lesquelles :

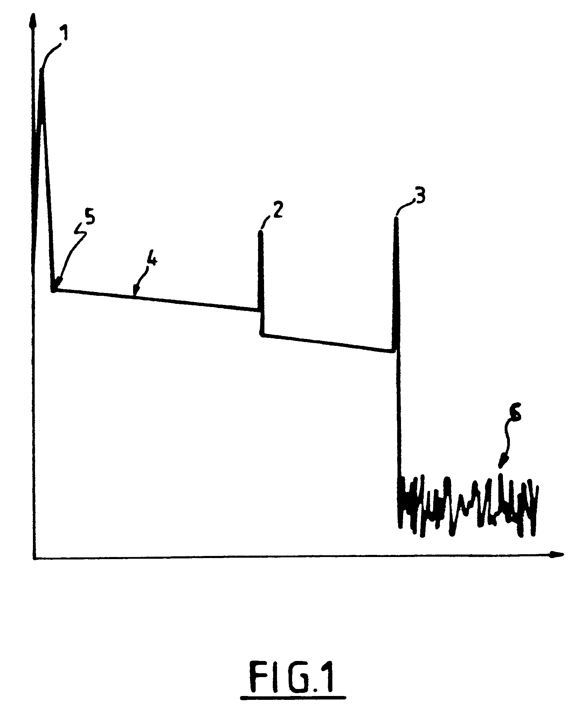

. La figure 1 représente une trace de rétrodiffusion.

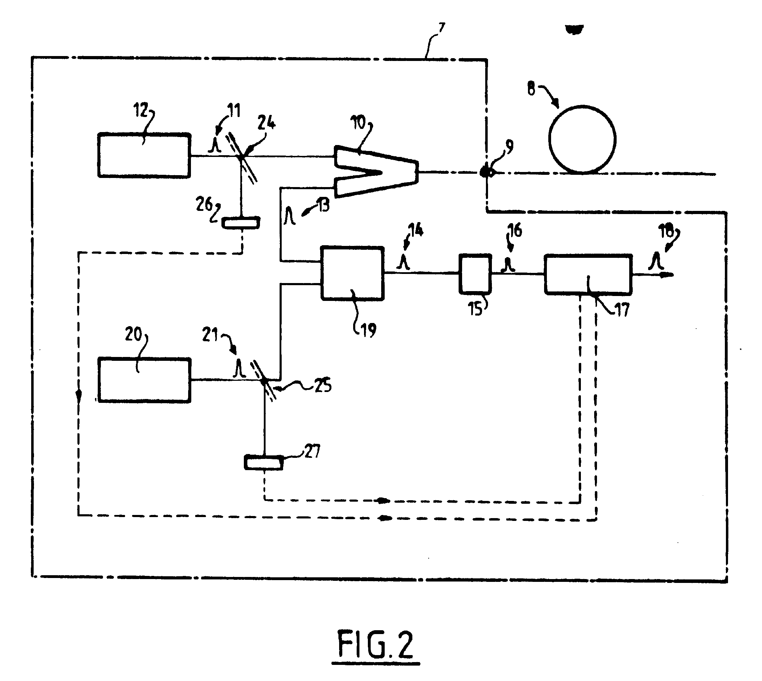

. La figure 2 représente un schéma de principe du procédé de l'invention.

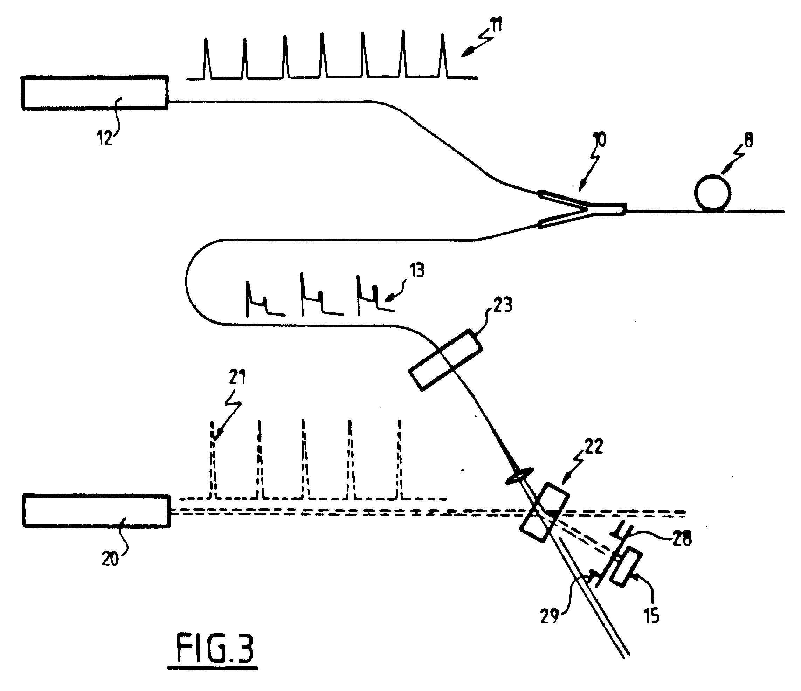

. La figure 3 est une représentation du réflectomètre de l'invention.

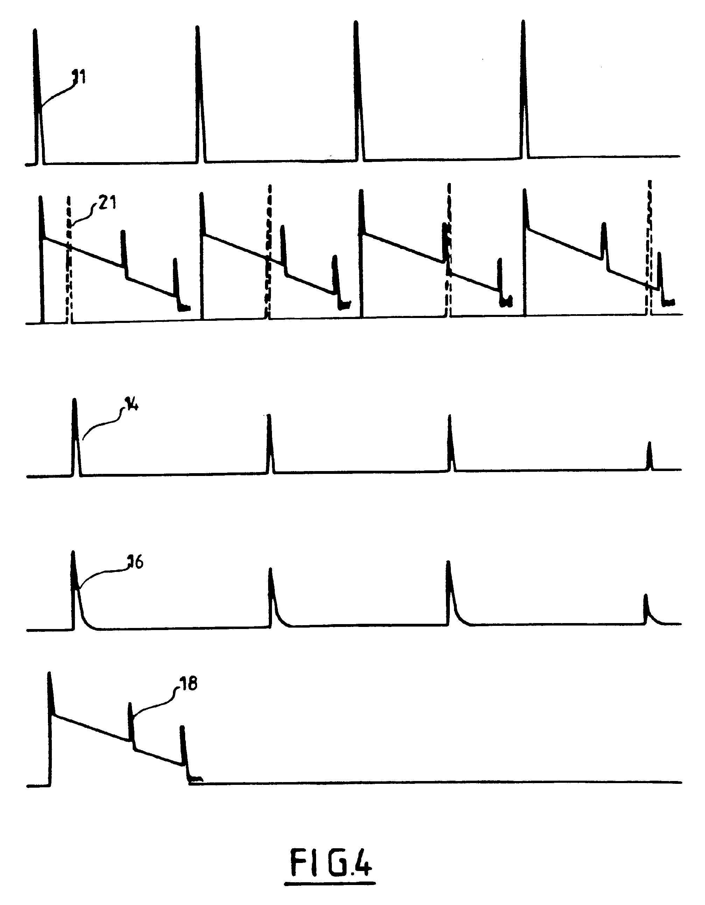

. La figure 4 est un schéma de principe explicatif du procédé de l'invention.

La trace de rétrodiffusion représenté sur la figure 1 comporte un ou plusieurs pics 2 à 3 engendrés par le signal sonde 11 au cours de sa propagation dans le système 8.

Entre ces pics 1 à 3, la décroissance de la trace dans la zone 4 est fonction de l'atténuation linéique de la fibre.

Le bruit de l'ensemble détection amplification est représenté en 6.

Le pic 1 est produit par la réflection de l'impulsion sonde 11 à l'entrée du système 8. Le rapport signal à bruit au point 5 au pied du pic 1 indique la dynamique du réflectomètre.

Le réflectomètre 7 est destiné à analyser l'ensemble 8 qui est constitué d'un ensemble quelconque d'éléments d'optique guidée. Le plus souvent, il s'agit d'un ensemble de fibres, réseaux de guides optiques et de composants divers, connecteurs, coupleurs, atténuateurs ...

Un tel ensemble peut être un élément d'un réseau de télécommunication à fibre optique.

La liaison du réflectomètre 7 à l'ensemble 8 est réalisé par le connecteur 9. Un coupleur 10 en Y permet l'envoi d'un signal lumineux 11 émis par la source 12 dans l'ensemble 8 et l'extraction du signal rétrodiffusé 13.

Traditionnellement, ce signal rétrodiffusé est directement détecté puis amplifié, échantillonné électroniquement, traité en vue d'augmenter le rapport signal à bruit et visualisé.

Au contraire selon l'invention, ce signal rétrodiffusé 13 est échantillonné optiquement de manière à produire un signal lumineux 14 lui-même transformé par un photodétecteur 15 en un signal électrique 16. L'unité de traitement 17 recompose alors un signal électrique 18 correspondant au signal optique rétrodiffusé 13. Ce signal 18 est alors soit visualisé soit directement utilisé pour tout traitement ultérieur souhaité.

L'échantillonnage est obtenu par un système de porte opto-optique 19 commandé par un laser ou par une diode laser 20 produisant des impulsions 21. La porte opto-optique 19 comporte un cristal non linéaire 22 et le laser 20 émet des impulsions lumineuses 21 constituant un signal de pompe périodique dont la fréquence de répétition est voisine de celle des impulsions du signal de sonde 11 ou voisine d'un multiple ou d'un sous-multiple de cette fréquence.

Par l'effet du signal de sonde 11 sur le système de guides optiques 8 sont produits des signaux optiques rétrodiffusés 13. Chacun de ces signaux a une durée sensiblement supérieure à celle d'une impulsion du signal de sonde 11. La forme de ces signaux est fonction de la nature des éléments ayant produit la rétrodiffusion. La porte opto-optique 19 produit un signal optique échantillonné 14 qui est reçu par le photodétecteur 15. Chacun des signaux 14 est déformé par la fonction de transfert du détecteur 15 et donc sensiblement élargi. Toutefois, le traitement électronique de ce signal réalisé par l'unité de traitement 17 permet de s'affranchir de cet élargissement et de reconstituer un signal électrique sensiblement homothétique du signal optique 13. A cet effet, l'unité de traitement 17 peut par exemple affecter à chaque impulsion une valeur fonction de l'énergie de l'impulsion 16 correspondante.

Le procédé de l'invention permet de s'affranchir de la fonction de transfert du détecteur 15 et donc d'utiliser un ensemble détection-amplification ayant une faible bande passante.

Il suffit qu'elle soit l'inverse de la période de récurrence des impulsions de pompe 21, et donc très inférieure à celle nécessitée par les procédés de l'art antérieur qui doivent être de l'ordre de l'inverse de la durée des impulsions sonde. En effet, la résolution du réflectomètre n'est plus fixée par la bande passante de l'ensemble détection-amplification, mais par les performances de la porte opto-optique qui met en oeuvre des phénomènes d'optique non linéaire ultra-rapides.

Selon l'invention, le très fort taux d'extinction de la porte 19, joint à la faible valeur de la bande passante de l'ensemble détection-amplifiation, conduit à une dynamique beaucoup plus grande que celle permise par les dispositifs et les procédés de l'art antérieur, sans devoir céder sur le pouvoir de résolution.

Les sources 12 et 20 sont des sources susceptibles de fournir des impulsions lumineuses brèves et cohérentes. Ce sont de préférence des lasers ou des diodes laser.

Les diodes laser utilisées pour fournir les impulsions sondes émettent de préférence des signaux à des longueurs d'ondes de 0,85 microns, 1,3 microns ou 1,55 microns qui sont les longueurs d'ondes d'utilisation habituelles des fibres optiques.

Différents types de portes opto-optiques peuvent être utilisées; de préférence on utilisera un cristal non linéaire d'ordre 2 par exemple un cristal de KDP qui réalise une conversion paramétrique non colinéaire de fréquence. Afin d'améliorer le rapport signal à bruit et d'éviter des signaux parasites éventuels, le photodétecteur, sensible bien entendu à la fréquence engendrée dans le cristal, est rendu insensible à la fois au signal de réponse rétrodiffusé et au signal de pompe. A cet effet, le photodétecteur est précédé d'un filtre chromatique 28 ou d'un filtre spatial 29, ou simultanément des deux.

Si T1 est le temps séparant deux impulsions du signal de sonde 11, on définit f1, la fréquence de répétition de la source de sonde 12, par f1 = 1/T1. De même, si T2 le temps séparant deux impulsions du signal de pompe 21, on définit f2 la fréquence de répétition du laser de pompe 20, par f2 = 1/T2. On choisit f2 de sorte que $f2 = kf1 + \delta f$, k étant un entier ou l'inverse d'un entier. Alors $T1 = kT2 + \delta T$. Ceci permet d'obtenir une résolution liée à $\delta T$, puisque deux échantillons successifs fournissent des informations sur deux points de la fibre espacés de $c/N1\delta T$. c représente la vitesse de la lumière dans le vide et N1 l'indice de groupe de la fibre.

Selon un mode de réalisation préféré, un amplificateur optique 23 est interposé entre le coupleur optique 10 et la porte opto-optique 19 ce qui permet d'exploiter des niveaux faibles du signal rétrodiffusé 13.

Des fluctuations de niveau soit du signal de sonde 11 soit du signal de pompe 21 peuvent produire des effets indésirables sur le signal rétrodiffusé lumineux échantillonné 13. Ces effets peuvent être compensés au niveau de l'unité de traitement électronique à partir de la saisie préalable du niveau du signal émis 11 et de celui du signal de pompe 21. Pour cela des séparateurs 24, 25 sont placés à la sortie des sources 12 et 20 pour prélever une faible partie des signaux émis. On peut également exploiter les signaux arrières des sources 12 et 20 , lorsque ces sources sont des lasers. Les signaux ainsi prélevés sont dirigés sur des détecteurs 26, 27 qui fournissent à l'unité de traitement 17 des signaux électriques caractéristiques de la puissance des impulsions respectivement de sonde et de pompe.

Dans certaines configurations particulières, afin d'effectuer la saisie d'échantillons isolés, la fréquence de répétition des impulsions de pompe sera rendue égale à celle des impulsions du signal de sonde, ou égale à un multiple entier de cette fréquence.

Lorsque le signal échantilloné 14 a un niveau de puissance faible celui-ci est augmenté en interposant un amplificateur otique 23 soit entre le coupleur 10 et l'échantillonneur 19, 20 soit après l'échantillonneur 19, 20 et avant le détecteur 15.

L'utilisation d'un échantillonneur opto-optique 19, 20 permet donc l'analyse de signaux optiques récurrents 13 même composés d'impulsions brèves et de faible puissance avec une grande dynamique et une haute résolution, en s'affranchissant des contraintes imposées par la réponse impulsionnelle de l'ensemble de détection-amplification 15.

## Revendications

1. Procédé d'analyse de composants d'optique guidée, fibres optiques ou réseaux de guides optiques par réflectométrie dans le domaine temporel dans lequel on envoie un signal sonde lumineux composé d'impulsions brèves périodiques dans un guide relié au système à analyser, caractérisé en ce que:

. Le signal de réponse rétrodiffusé est échantillonné par interaction avec un signal lumineux dit signal de pompe, composé d'impulsions lumineuses brèves périodiques, de manière à produire un nouveau signal dit signal échantillonné reçu par un photodétecteur insensible au signal de pompe et insensible au signal de réponse rétrodiffusé ;

. La fréquence de répétition des impulsions du signal de pompe étant voisine de celle des impulsions du signal de sonde, ou voisine d'un multiple ou d'un sous-multiple de cette fréquence;

. L'on réalise la recomposition du signal de réponse rétrodiffusé à partir des échantillons de signal fournis par le photodétecteur.

2. Réflectomètre dans le domaine temporel destiné à l'analyse de composants d'optique guidée, fibre optique, ou réseaux de guides optiques, du type comportant:

. des moyens d'émission 12 d'un signal lumineux de sonde 11 composé d'impulsions brèves périodiques,

. un dispositif séparateur 10 de flux lumineux permettant l'injection du signal de sonde 11 dans un guide relié au système à analyser 8 et l'extraction du signal de réponse rétrodiffusé 13,

. des moyens d'analyse du signal de réponse rétrodiffusé, caractérisé en ce que les moyens d'analyse du signal de réponse rétrodiffusé comportent :

. des moyens de production 20 d'une onde de pompe lumineuse 21, composée d'impulsions brèves périodiques, la fréquence de répétition de ces impulsions étant voisine de la fréquence de répétition du signal de sonde, ou voisine d'un multiple ou d'un sous-multiple de cette fréquence,

. des moyens 19 assurant l'interaction de l'onde de pompe avec le signal de réponse rétrodiffusé 13 de manière à réaliser l'échantillonnage optique du signal de réponse et la production d'un signal lumineux échantillonné 14,

. un photodétecteur 15 recevant le signal lumineux échantillonné 14 et insensible à l'onde de pompe et au signal de réponse rétrodiffusé,

. une unité électronique 17 traitant et mémorisant les échantillons photodétectés 16 et recomposant le signal de réponse rétrodiffusé 18.

3. Réflectomètre selon la revendication 2, caractérisé en ce que les moyens d'émission 12 du signal de sonde et les moyens de production 20 de l'onde de pompe sont des lasers ou des diodes laser.

4. Réflectomètre selon l'une quelconque des revendications 2 et 3, caractérisé en ce que les longueurs d'ondes optiques du signal de sonde, du signal de pompe et du signal lumineux échantillonné sont différentes deux à deux.

5. Réflectomètre selon la revendication 4, caractérisé en ce que le photodétecteur 15 est précédé de moyens de filtrage 29,28 dans les domaines spatial et chromatique, ou dans un seul de ces domaines, améliorant son insensibilité au signal de réponse rétrodiffusé et au signal de pompe.

6. Réflectomètre selon l'une quelconque des revendications 2 à 5, caractérisé en ce que les moyens 19 assurant l'interaction de l'onde de pompe avec le signal de réponse rétrodiffusé comporte un cristal non linéaire 22 d'ordre deux ou trois ou un guide optique à effet non linéaire d'ordre 2 ou 3.

7. Réflectomètre selon l'une quelconque des revendications 2 à 6, caractérisé en ce que le niveau de puissance du signal échantillonné est augmenté par amplification optique directe pratiquée sur le signal de réponse rétrodiffusé, entre le coupleur et l'échantillonneur, ou sur le signal lumineux échantillonné, entre l'échantillonneur et le photodétecteur ou sur l'un et l'autre de ces signaux.

8. Réflectomètre selon l'une quelconque des revendications 2 à 7, caractérisé en ce qu'il comporte des moyens 24, 25, 26, 27 permettant de compenser les effets des fluctuations des signaux de sonde et de pompe sur le signal de réponse détecté.

9. Réflectomètre selon l'une quelconque des revendications 2 à 8, caractérisé en ce que la fréquence de répétition des impulsions de pompe peut être rendue égale à celle des impulsions du signal de sonde, ou égale à un multiple ou un sous-multiple de celle-ci, en vue d'effectuer la saisie d'échantillons isolés.

**Patentansprüche**

1. Verfahren zur Analyse von Bestandteilen von Lichtwellenleitern, Lichtleitfasern oder Lichtleiternetzen durch Reflektometrie im zeitlichen Bereich, in dem ein aus periodischen Kurzzeitimpulsen gebildetes sondensignal über einen an das zu analysierende System angeschlossenen Leiter übertragen wird, dadurch gekennzeichnet, daß

. das zurückgestrahlte Antwortsignal interaktiv von einem aus periodischen Kurzzeitimpulsen bestehenden Signal - dem sogenannten Pumpensignal - abgetastet wird, woraus ein neues Signal - das sogenannte Abtastsignal - erzeugt wird, welches von einem Fotozellendetektor empfangen wird, der dem Pumpensignal und dem Antwortsignal gegenüber unempfindlich ist,

. die Wiederholfrequenz des Pumpensignals der des Sondensignals bzw. einem ganzzahligen Mehrfachen oder Teil dieser Frequenz weitgehend entspricht,

. die Erzeugung des zurückgestrahlten Antwortsignals aus den vom Fotozellendetektor gelieferten Signalabtastwerten erfolgt.

2. Reflektometer im zeitlichen Bereich zur Analyse von Bestandteilen von Lichtwellenleitern, Lichtleitfasern oder Lichtleiternetzen mit

. Mitteln (12) zum Senden eines aus periodischen Kurzzeitimpulsen gebildeten Sondensignals (11),

. einer Vorrichtung (10) zur Unterbrechung des Lichtflusses und Einspeisung des Sondensignals (11) in einen an das zu analysierende System (8) angeschlossenen Leiter und Extraktion des zurückgestrahlten Antwortsignals (13),

. Mitteln zur Analyse des zurückgestrahlten Antwortsignals, dadurch gekennzeichnet, daß die Mittel zur Analyse des zurückgestrahlten Antwortsignals

. Mittel (20) zur Erzeugung eines Pumpensignals (21) aus periodischen Kurzzeitimpulsen, deren Wiederholfrequenz der des Sondensignals bezw. einen ganzzahligen Mehrfachen oder Teil dieser Frequenz weitgehend entspricht,

– Mittel (19) zur Auslösung einer Interaktion zwischen Pumpensignal und zurückgestrahltem Antwortsignal (13), durch die ein optische Abtastung des Antwortsignals und die Erzeugung eines Abtastsignals (14) bewirkt wird,

– einen Fotozellendetektor (15) zum Empfang des Abtastsignals (14), der dem Pumpensignal und dem zurückgestrahlten Antwortsignal gegenüber unempfindlich ist,

– eine Elektronikeinheit (17) zur Verarbeitung und Speicherung der von Fotozellendetektor gelieferten Abtastwerte (16) und Erzeugung des zurückgestrahlten Antwortsignals (18) besitzen.

3. Reflektometer nach Patentanspruch 2, dadurch gekennzeichnet, daß die Mittel (12) zur Ausstrahlung des Sondensignals und die Mittel (20) zur Erzeugung des Pumpensignals Laserstrahler oder Laserdioden sind.

4. Reflektometer nach einem beliebigen der Patentansprüche 2 oder 3, dadurch gekennzeichnet, daß die Lichtwellenlängen des Sondensignals, des Pumpensignals und des Abtastsignals sich paarweise voneinander unterscheiden.

5. Reflecktometer nach Patentanspruch 4, dadurch gekennzeichnet, daß vor dem Fotozellendetektor (15) Mittel (29, 28) zur Filterung im räumlichen und spektralen Bereich oder in nur einem von diesen eingesetzt werden, durch die dessen Unempfindlichkeit dem Pumpensignal und dem zurückgestrahlten Antwortsignal gegenüber erhöht wird.

6. Reflektometer nach einem beliebigen der Patentansprüche 2 bis 5, dadurch gekennzeichnet, daß die Mittel (19) zur Interaktion zwischen Pumpenlichtwelle und zurückgestrahlten Antwortsignal einen nichtlinearen Kristall (22) zweiter oder dritter Ordnung oder einem nichtlinearen Lichtleiter zweiter oder dritter Ordnung besitzt.

7. Reflektometer nach einem beliebigen der Patentansprüche 2 bis 6, dadurch gekennzeichnet, daß das Leistungsniveau des Abtastsignals durch direkte optische Verstärkung des zurückgestrahlten Antwortsignals zwischen Koppler und Abtastvorrichtung, durch direkte optische Verstärkung des Abtastssignals zwischen Abtastvorrichtung und Fotozellen-detektor oder durch direkte optische Verstärkung beider Signale verstärkt wird.

8. Reflektometer nach einem beliebigen der Patentansprüche 2 bis 7, dadurch gekennzeichnet, daß es Mittel (24, 25, 26, 27) zur Kompensierung von Fluktuationseffekte auf das erkannte Antwortsignal durch die Sondensignale und Pumpensignale besitzt.

9. Reflektometer nach einem beliebigen der Patentansprüche 2 bis 8, dadurch gekennzeichnet, daß die Impulsfrequenz der Pumpensignale mit der des Sondensignals bzw. einem ganzzahligen Mehrfachen oder Teil dieser Frequenz zur Deckung gebracht werden kann, um Einzelabtastungen vornehmen zum können.

## Claims

1. Method of analyzing guided optics components, optical fibres or optical guide networks by reflectometry in the time sphere, wherein a light probe signal formed of short periodic pulses is fed into a guide connected to the system to be analyzed, characterized in that :

. the backscattered response signal is sampled by interaction with a light signal called pump signal, formed of short periodic light pulses so as to produce a new signal called sampled signal which is received by a photodetector which is blind to the pump signal and blind to the backscattered response signal ;

. the repetition frequency of the pulses of the pump signal being close to that of the pulses of the probe signal or close to a multiple or a sub-multiple of this frequency ;

. the backscattered response signal is recomposed from signal samples delivered by the photodetector ;

2. Reflectometer in the time sphere for analyzing guided optics components, optical fibres or optical guide networks of the type comprising :

. means (12) for transmitting a probe light signal (11) formed of short periodic pulses,

. a light flow separator device (10) for injecting the probe signal (11) into a guide connected to the system (8) to be analyzed and extracting the backscattered response signal (13), and

. means for analyzing the backscattered response signal, characterized in that the means for analyzing the backscattered response signal comprise :

. means (20) for producing a light pump wave (21) formed of short periodic pulses, the repetition frequency of theses pulses being close to the repetition frequency fo the probe signal or close to a multiple or a sub-multiple of this frequency,

. means (19) for causing interaction of the pump signal with the backscattered response signal (13) so as to provide optical sampling of the response signal and produce a sampled light signal (14),

. a photodetector (15) receiving the sampled light signal and insensitive to the pump signal and to the backscattered response signal,

. an electronic unit (17) processing and storing the photodetected samples (16) and recomposing the backscattered response signal (18).

3. Reflectometer according to claim 2, characterized in that the means (12) for emitting the probe signal and the means (20) for producing the pump signal are lasers or laser diodes.

4. Reflectometer according to claim 2 or 3, characterized in that the optical wavelengths of the probe signal, of the pump signal and of the sampled light signal are different two by two.

5. Reflectometer according to claim 4, characterized in that the photodetector (15) is preceded by filtering means (28, 29) in the spatial and chromatic spheres, or in one only of these spheres, which improves its insensitivity to the backscattered response signal and to the pump signal ;

6. Reflectometer according to anyone of claims 2 to 5, characterized in that the means (19) for causing interaction of the pump signal with the backscattered response signal comprise a non linear crystal (22) of order two or three or a non linear effect optical guide of order two or three.

7. Reflectometer according anyone of claims 2 to 6, characterized in that the power level of the sampled signal is increased by direct optical amplification of the backscattered response signal, between the coupler and the sampler or the sampled light signal between the sampler and the photodetector or both these signals.

8. Reflectometer according to anyone of claims 2 to 7, characterized in that it comprises means (24, 25, 26, 27) for offsetting the effects of the fluctuations of the probe and pump signals on the detected response signal.

9. Reflectometer according to anyone of claims 2 to 8, characterized in that the repetition frequency of the pump pulses may be made equal to that of the pulses of the probe signal, or equal to a multiple or a sub-multiple thereof, for the acquisition of isolated samples.

FIG.1

FIG.2

FIG.3

# FIG.4